# FASCICULE DE BREVET EUROPEEN

(11) **EP 2 536 920 B1**
(45) Date de publication et mention de la délivrance du brevet: **21.04.2021**
(21) Numéro de dépôt: 11709158.7
(22) Date de dépôt: 11.02.2011
(51) Int. Cl.: F01D 7/00, B64C 11/32, F02C 6/20

(54) **TURBOPROPULSEUR MUNI D'UN DISPOSITIF D'ORIENTATION DE PALES**
MIT EINER BLATTPOSITIONIERUNGSVORRICHTUNG AUSGESTATTETER TURBOPROPELLER
TURBOPROP PROVIDED WITH A BLADE-POSITIONING DEVICE

(30) Priorité: 15.02.2010 FR 1051031
(43) Date de publication de la demande: 26.12.2012
(73) Titulaire: Safran Aircraft Engines, 75015 Paris (FR)
(72) Inventeur: BALK, Wouter, F-77000 Melun (FR); CHARIER, Gilles, Alain, F-77130 La Grande Paroisse (FR); GALLET, François, F-75012 Paris (FR)
(74) Mandataire: Lebkiri, Alexandre
(86) Numéro de dépôt international: PCT/FR2011/050293
(87) Numéro de publication internationale: WO 2011/098736

(56) Documents cités:
- EP-A1- 1 921 325
- EP-B1- 0 203 881
- US-A- 3 873 236
- US-A- 4 657 484
- US-A- 4 718 823

## Description

La présente invention se rapporte de façon générale à un turbopropulseur muni d'un dispositif d'orientation de pales, et plus particulièrement à un turbopropulseur muni d'un dispositif d'orientation de pales pour hélices contrarotatives.

Le document FR2908451 décrit un turbopropulseur comportant un ensemble de pales à orientation réglable. Le turbopropulseur comporte notamment un carter tournant solidairement lié à un rotor de turbine. Les pales sont solidaires du carter tournant et sont couplées, pour le réglage de leur orientation, à un vérin annulaire porté par le carter tournant. Le vérin annulaire comporte deux chambres séparées par un piston ; ces dernières sont alimentées en fluide d'actionnement par deux conduits traversant le rotor de la turbine et rejoignent le stator de cette turbine au voisinage de l'axe du turbopropulseur où sont agencées des chambres de distribution de fluide d'actionnement, à joints tournants étanches.

Les documents EP 0 203 881, US 4 718 823 et US 4 657 484 décrivent des turbopropulseurs avec des pales à pas variables.

Selon une telle mise en œuvre, le vérin annulaire est solidaire du carter tournant, ce qui implique que le vérin annulaire est également tournant. Les deux conduits d'alimentation en fluide d'actionnement sont, reliés, à une première extrémité, au vérin annulaire tournant et à leur extrémité opposée aux chambres de distribution de fluide d'actionnement situées au niveau du stator. Ce qui implique pour les conduits un passage d'un repère tournant (carter tournant) à un repère fixe (stator). Des joints tournants équipent les conduits de façon à assurer l'étanchéité.

Un inconvénient de ce type de dispositif réside en ce que les sollicitations quasi-permanentes des joints tournants entraînent une dégradation rapide de ces derniers.

Un inconvénient supplémentaire de ce type de dispositif réside en ce que des risques de cokéfactions du fluide que comportent les conduits sont présents et sont dus notamment à l'environnement haute température, formé par la turbine, que traversent les conduits.

L'invention a donc plus particulièrement pour but de remédier aux inconvénients des dispositifs précités. Dans ce contexte, l'invention vise à proposer un turbopropulseur muni d'un dispositif d'orientation de pales non soumis à un risque de cokéfaction et comportant une durée de vie accrue. En outre, l'invention vise à proposer un turbopropulseur muni d'un dispositif d'orientation de pales facilement accessible permettant de réaliser des opérations de maintenances.

A cette fin, l'invention porte sur un turbopropulseur selon la revendication 1.

Grâce à l'invention, le liquide utilisé pour piloter l'organe n'est pas soumis à un risque de cokéfaction. Cet avantage est assuré par le fait que le dispositif d'orientation est positionné en totalité dans un environnement (entre la surface externe de la turbine et la surface interne de la nacelle fixe) dont la température ne dépasse pas 120°C

Grâce à l'invention, les opérations de maintenance sont facilitées par le fait que le dispositif d'orientation est positionné en totalité à l'extérieur de la turbine. En effet, une telle particularité rend le dispositif d'orientation aisément accessible.

Selon un mode de réalisation particulièrement avantageux, ledit dispositif d'orientation comporte des moyens d'interface situés entre ledit au moins un organe et lesdits moyens de transformation de mouvement, lesdits moyens d'interface étant aptes à :
- transmettre un mouvement de translation de ladite tige aux dits moyens de transformation de mouvement,
- séparer ledit organe desdits moyens de transformation de mouvement de sorte que lorsque ladite nacelle rotative est en rotation, ledit au moins un organe ne soit pas entraîné en rotation par lesdits moyens de transformation de mouvement.

Ainsi, selon ce mode de réalisation particulièrement avantageux, contrairement aux turbopropulseurs de l'état de la technique, l'organe n'est pas soumis à un mouvement de rotation, ce qui permet d'éviter une usure prématurée du dispositif d'orientation de pales pour hélice notamment en ce qui concerne les conduits d'alimentation qui sont situés selon l'invention dans un repère fixe, il n'y a donc pas de changement de repère. Avantageusement, il n'est pas nécessaire d'utiliser des joints tournants assurant habituellement l'étanchéité pour le passage des conduits, permettant de piloter la tige de l'organe, d'un repère tournant (rotor) à un repère fixe (stator).

Outre les caractéristiques principales qui viennent d'être mentionnées dans le paragraphe précédent, le turbopropulseur muni d'un dispositif d'orientation de pales selon l'invention peut présenter une ou plusieurs caractéristiques supplémentaires ci-dessous, considérées individuellement ou selon toutes les combinaisons techniquement réalisables :
- ledit dispositif d'orientation de pale comporte un nombre d'organe compris entre trois et six ;
- ledit turbopropulseur comporte une deuxième nacelle rotative comportant une pluralité de pieds de pale, ladite pluralité de pieds de pale de ladite deuxième nacelle rotative étant apte à être orientée par un deuxième dispositif d'orientation conforme à l'invention.

D'autres caractéristiques et avantages de l'invention ressortiront clairement de la description qui en est donnée ci-après, à titre indicatif et nullement limitatif, en référence aux figures annexées ci-jointes parmi lesquelles :
- les figures 1 et 2 représentent, de façon schématique, un exemple de turbopropulseur selon un premier mode de réalisation, qui n'est pas revendiqué;
- la figure 3 représente, de façon schématique, deux dispositifs d'orientation de pales incorporés dans un turbopropulseur selon un deuxième mode de réalisation, qui n'est pas revendiqué;
- la figure 4 est une coupe selon A-A du dispositif représenté sur la figure 3 ;
- la figure 5 représente, de façon schématique, deux dispositifs d'orientation de pales incorporés dans un turbopropulseur selon l'invention ;
- la figure 6 représente, de façon schématique, deux dispositifs d'orientation de pales incorporés dans un turbopropulseur selon un quatrième mode de réalisation, qui n'est pas revendiqué.

Pour des raisons de clarté, seuls les éléments utiles pour la compréhension de l'invention ont été représentés et ceci, sans respect de l'échelle et de manière schématique. En outre, les éléments similaires situés sur différentes figures comportent des références identiques.

Pour la suite de la description, le terme nacelle est désigné indifféremment par hélice.

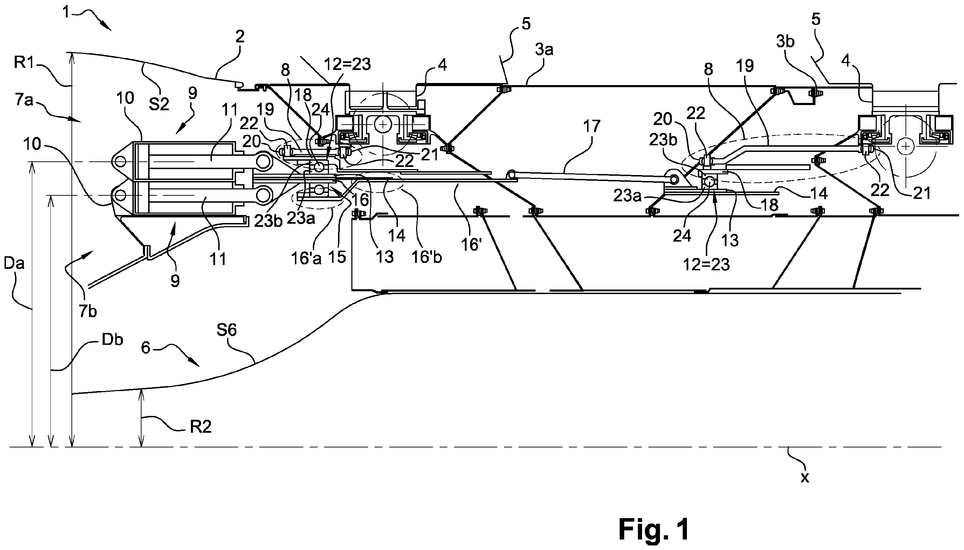

La figure 1 illustre une partie d'un turbopropulseur 1 comportant selon l'exemple, une nacelle fixe 2 ainsi que deux nacelles rotatives 3a et 3b comportant chacune une pluralité de pieds 4 de pales 5 à orientation réglable. Les nacelles rotatives 3a et 3b sont destinées à tourner dans des sens opposés selon un axe longitudinal x.

Les nacelles 2, 3a et 3b contiennent notamment une turbine 6 coaxiale selon l'axe longitudinal x. Les nacelles rotatives 3a et 3b sont solidaires du rotor (non représenté) de la turbine 6.

En d'autres termes, la nacelle fixe 2 est située dans un repère fixe contrairement aux nacelles rotatives 3a et 3b qui sont situées dans un repère tournant.

Le turbopropulseur 1 est équipé de deux dispositifs d'orientation 7a et 7b de pales conforme à l'invention. Dans un premier temps, pour faciliter la compréhension de l'invention, un seul dispositif d'orientation sera décrit (le dispositif d'orientation 7a permettant d'orienter les pales 5 que comporte la nacelle rotative 3a, étant entendu que les deux dispositifs d'orientation 7a et 7b sont quasiment identiques ; il est à noter que les éléments identiques que comportent les dispositifs d'orientation 7a et 7b portent des références identiques. D'une manière générale, le dispositif d'orientation 7a permet d'orienter les pales 5 que comporte la nacelle rotative 3a et comporte :
- pour chaque pale 5, des moyens 8 de transformation de mouvement aptes à transformer un mouvement de translation en mouvement de rotation ; les moyens 8 de transformation de mouvement sont solidaires de la nacelle rotative 3a et sont aptes à faire pivoter une pale 5 de la nacelle rotative 3a,
- un organe 9 comportant un corps 10 solidaire de la nacelle 2 fixe et une tige 11 apte à coulisser selon un axe sensiblement parallèle à l'axe longitudinal x ; il s'ensuit que le corps 10 et les conduits de commande (non représentés) permettant de faire coulisser la tige 11 dans un sens ou dans l'autre sont situés en totalité dans un repère fixe; dans l'exemple illustré figure 1, l'organe 9 est un vérin,
- des moyens 12 d'interface situés entre l'organe 9 et les moyens 8 de transformation de mouvement. Les moyens 12 d'interface sont aptes à :
   ∘ transmettre un mouvement de translation de la tige 11 aux moyens 8 de transformation de mouvement,
   ∘ séparer en rotation l'organe 9 des moyens 8 de transformation de mouvement de sorte que lorsque la nacelle rotative 3a est entraînée en rotation, l'organe 9 ne soit pas entraîné en rotation par les moyens 8 de transformation de mouvement.

De manière générale, il convient de noter que les dispositifs d'orientation 7a et 7b sont chacun positionné entre la surface interne S2 de la nacelle fixe 2 et la surface externe S6 de la turbine 6.

En d'autres termes, les dispositifs d'orientation 7a et 7b sont positionnés respectivement à une distance Da et Db de l'axe longitudinal x supérieure au rayon R2 de la turbine 6 et inférieure au rayon R1 de la nacelle fixe. De ce fait, les dispositifs d'orientation 7a et 7b sont dans un environnement dont la température est inférieure à 120°C. Cette particularité permet d'éviter les phénomènes de cokéfaction.

En outre, les corps 10 des organes 9 sont solidaires de la nacelle fixe 2, ce qui permet d'accroître la durée de fonctionnement de ces derniers. En effet, ceux-ci ne sont soumis à aucun mouvement de rotation pouvant engendrer une usure prématurée.

Dans l'exemple illustré figure 1, la tige 11 de chaque organe 9 est apte à coopérer à l'une de ses extrémités avec un premier anneau 13 d'axe longitudinal x. Le premier anneau 13 est en outre guidé en translation par un anneau de guidage 14 d'axe longitudinal x et solidaire de la nacelle fixe 2. La fonction de cet anneau de guidage 14 est de guider en translation le premier anneau 13 selon un axe sensiblement parallèle à l'axe longitudinal x lorsque ce dernier est animé d'un mouvement de translation engendré par la tige 11.

Dans le cas du dispositif 7a relié à la nacelle rotative 3a, la tige 11 est directement reliée au premier anneau 13.

En revanche, dans le cas du dispositif 7b relié à la nacelle rotative 3b, la tige 11 est reliée au premier anneau 13 par l'intermédiaire d'un roulement 15, d'un anneau 16, d'un anneau 16' et d'un bras 17 formé dans notre exemple par une bielle.

Il est à noter que l'anneau 16' comporte une première partie 16'a et une deuxième partie 16'b. La deuxième partie 16'b de l'anneau 16' vient au contact de l'anneau de guidage 14 servant à guider en translation le premier anneau 13. De ce fait, l'anneau 16' est également guidé en translation par l'anneau de guidage 14.

La première partie 16'a est reliée mécaniquement à l'anneau 16 au moyen du roulement 15. Ainsi, lorsque la tige 11 est animée d'un mouvement de translation, l'anneau 16' est également animé d'un mouvement de translation ; en revanche, la tige 11 est séparée en rotation de l'anneau 16' via le roulement 15.

L'anneau 16' est relié à un premier anneau 13 au moyen du bras 17 formé par exemple d'une bielle.

Conformément aux dispositifs d'orientation 7a et 7b illustrés figure 1, les moyens 8 de transformation de mouvement comportent :
- un deuxième anneau 18 d'axe longitudinal x,
- une biellette 19 sensiblement parallèle à l'axe longitudinal x comportant un doigt 22 situé à une première extrémité 20 et un doigt 22 situé à une deuxième extrémité 21, les deux doigts 22 étant agencés perpendiculairement par rapport à l'axe longitudinal x.

Le doigt 22 situé à la première extrémité 20 est apte à coopérer avec le deuxième anneau 18 de sorte que lorsque le deuxième anneau 18 est soumis à un mouvement de translation, la biellette 19 soit également soumise à un mouvement de translation.

Le doigt 22 situé à la deuxième extrémité 21 est apte à coopérer avec un pied 4 de pale 5. Le doigt 22 est inséré dans un orifice (non représenté) que comporte le pied 4 de pale 5, l'orifice étant excentré de l'axe principal du pied 4 de pale 5. Ainsi, lorsque la biellette 19 est soumise à un mouvement de translation selon un axe sensiblement parallèle à l'axe longitudinal x, le doigt 22 situé à la deuxième extrémité 21 entraîne en rotation le pied 4 de pale 5. La pale 5 tourne de ce fait sur elle-même, c'est-à-dire autour de son axe principal (sensiblement perpendiculaire à l'axe x).

Chacun des moyens 12 d'interface situés entre l'organe 9 et les moyens 8 de transformation de mouvement sont formés par un roulement 23. Le roulement 23 comporte une première bague 23a montée fixe sur le premier anneau 13 et une deuxième bague 23b montée fixe sur le deuxième anneau 18.

La fonction de ce roulement 23 est de séparer en rotation l'organe 9 des moyens 8 de transformation de mouvement par des billes 24 que comporte le roulement 23. Parallèlement, lorsque la tige 11 effectue une translation, ce mouvement est transmis aux moyens 8 de transformation de mouvement via les bagues 23a et 23b du roulement 23.

De façon avantageuse, le dispositif d'orientation 7a (respectivement 7b) coopère avec la nacelle rotative 3a (respectivement 3b). Il s'ensuit que les pales 5 d'une nacelle rotative (par exemple la nacelle 3a) sont orientées indépendamment des pales 5 de l'autre nacelle rotative (dans notre exemple la nacelle 3b).

En outre, chaque tige 11 possède une course maximale et une course minimale correspondant chacune à une position de pale 5. A titre d'exemple, sur la figure 1, les deux tiges 11 se trouvent en course minimale (i.e. les deux tiges 11 sont introduites en totalité à l'intérieur du corps 10). Cette position pouvant, par exemple, correspondre à la position dite « drapeau » des pales 5 correspondant à un angle mesuré entre le plan de rotation des pales 5 et les pales 5 proche de 0°. La mise en drapeau des pales 5 est par exemple recherchée lorsque l'on désire annuler ou diminuer la poussée du turbopropulseur 1.

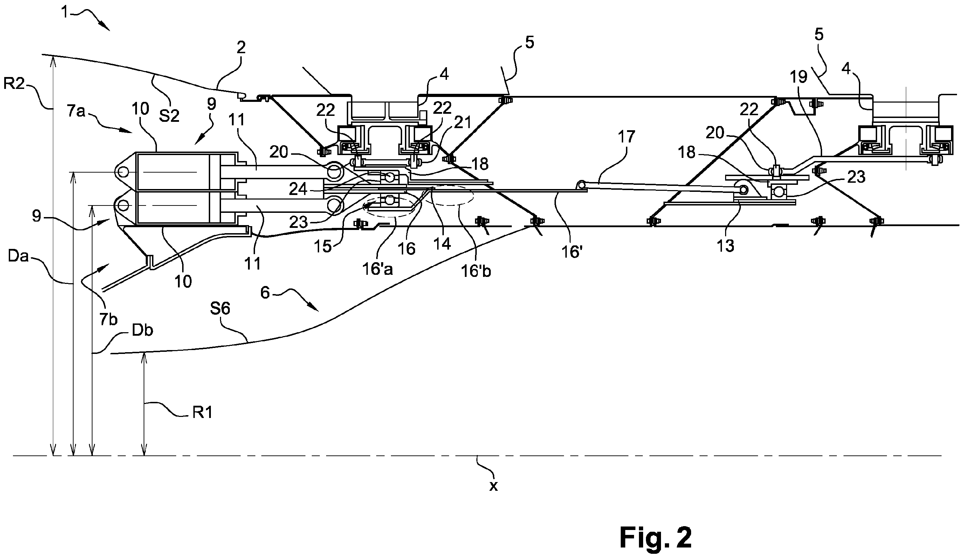

A titre de comparaison et telles qu'illustrées sur la figure 2, les deux tiges 11 se trouvent en course maximale (les deux tiges 11 font saillie en dehors du corps 10). Cette position pouvant par exemple correspondre à la position dite « reverse » des pales 5 correspondant à un angle mesuré entre le plan de rotation des pales 5 et les pales 5 d'environ -30°.

Il est entendu que ces positions ne sont aucunement limitatives, et les pales 5 peuvent être, par exemple, orientées selon différents angles mesurés entre le plan de rotation et les pales 5, comme par exemple 45°. Une telle orientation est habituellement recherchée lors de la phase de décollage d'un avion.

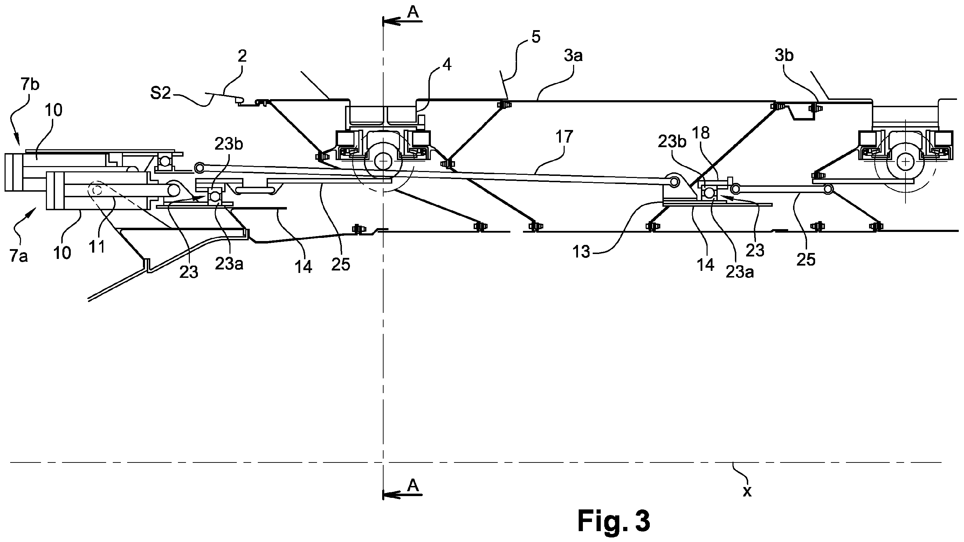

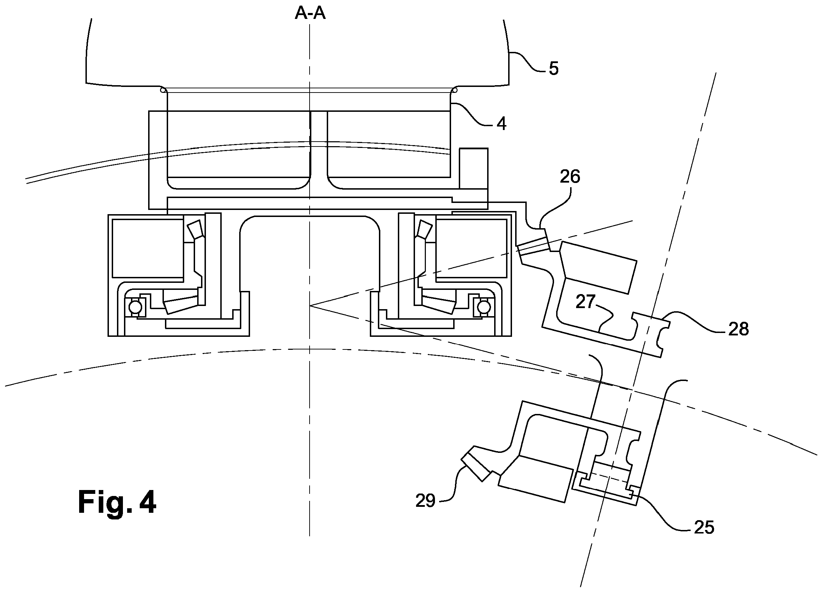

La figure 3 représente deux dispositifs d'orientation 7a et 7b selon un second mode de réalisation de l'invention. La figure 4 représente une coupe selon A-A du dispositif d'orientation 7a tel que représenté sur la figure 3.

Comparativement aux dispositifs d'orientation 7a et 7b représentés sur les figures 1 ou 2, les deux dispositifs d'orientation 7a et 7b représentés sur la figure 3 diffèrent en ce que chacun des moyens 8 de transformation de mouvement comportent notamment une crémaillère 25, une roue d'engrenage conique 26 et un pignon 27.

Selon une telle mise en œuvre, pour chaque pale 5, les moyens 8 de transformation de mouvement comportent :
- une crémaillère 25 solidaire du deuxième anneau 18, la crémaillère 25 étant sensiblement parallèle à l'axe longitudinal x,
- une roue d'engrenage conique 26 coaxiale et solidaire d'un pied 4 de pale 5, celle-ci se trouvant à la base du pied 4 de pale 5,
- un pignon 27 comportant un axe de rotation perpendiculaire d'un axe perpendiculaire dudit axe longitudinal x. Le pignon 27 comporte en particulier une première roue d'engrenage 28 apte à coopérer avec ladite crémaillère 25 et une deuxième roue d'engrenage 29 conique apte à coopérer avec la roue d'engrenage conique 26 que comporte le pied 4 de pale 5.

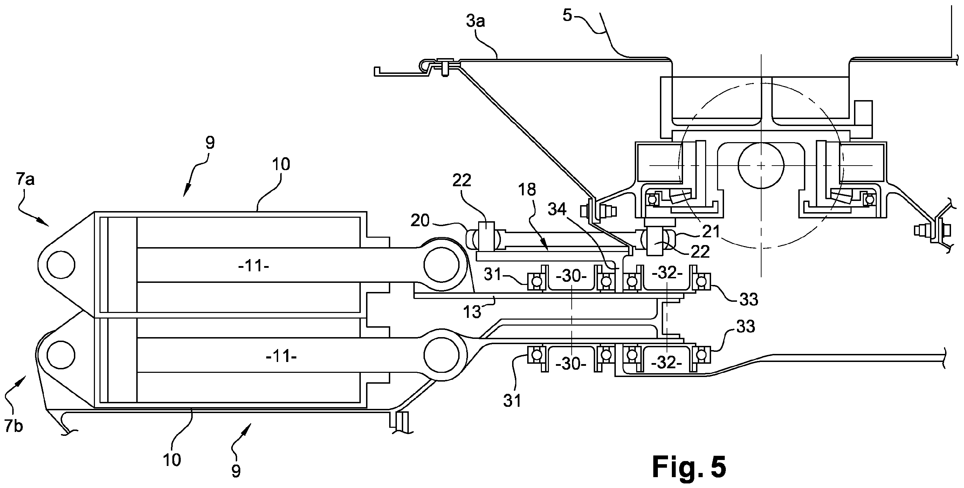

Les interactions entre les différents éléments sont à présent décrites. Pour chaque pale 5, lorsque la tige 11 est soumise à un mouvement de translation, celui-ci est transmis au deuxième anneau 18 qui entraine à son tour la crémaillère 25 en translation. Cette dernière, entraîne, par engrènement avec la première roue d'engrenage 28, en rotation le pignon 27. Le pignon 27 entraîne à son tour, via la deuxième roue d'engrenage 29 conique, la roue d'engrenage conique 26. Il s'ensuit un pivotement de la pale 5 sur elle-même. La figure 5 représente un turbopropulseur selon l'invention. Comparativement aux figures 1 à 3, un seul dispositif d'orientation 7a est représenté intégralement, celui-ci étant utilisé pour orienter les pales 5 que comporte la nacelle rotative 3a. Le dispositif d'orientation 7a représenté sur cette figure diffère des dispositifs d'orientation 7a qui sont représentés aux figures 1 à 4 en ce que, pour chaque pale 5, les moyens 12 d'interface comportent :
- un premier arbre 30 perpendiculaire ; le premier arbre 30 est situé perpendiculairement par rapport à l'axe longitudinal x et est en outre solidaire du premier anneau 13. Le premier arbre 30 comporte un premier roulement 31 coaxial,
- un deuxième arbre 32 perpendiculaire ; le deuxième arbre 32 est situé perpendiculairement par rapport à l'axe longitudinal x et est également solidaire du premier anneau 13. Le deuxième arbre 32 perpendiculaire comporte un deuxième roulement 33 coaxial.

Selon une telle mise en œuvre, le deuxième anneau 18 comporte une virole 34 interne. Cette dernière est positionnée entre le premier roulement 31 et le deuxième roulement 33.

Ainsi, lorsque la tige 11 de l'organe 9 est animée d'un mouvement de translation vers la droite (i.e. de la nacelle fixe 2 vers la nacelle rotative 3a), le mouvement de translation est transmis aux moyens 8 de transformation de mouvement via le premier arbre 30 ; lorsque la tige 11 est animée d'un mouvement de translation vers la gauche (i.e. de la nacelle rotative 3a vers la nacelle fixe 2), le mouvement de translation est transmis aux moyens 8 de transformation de mouvement via le deuxième arbre 32.

Par ailleurs, lorsque la nacelle rotative 3a et les moyens 8 de transformation de mouvement sont soumis à un mouvement de rotation, l'organe 9 est, via les premier et deuxième roulements coaxiaux 31 et 33, séparé en rotation des moyens 8 de transformation de mouvement.

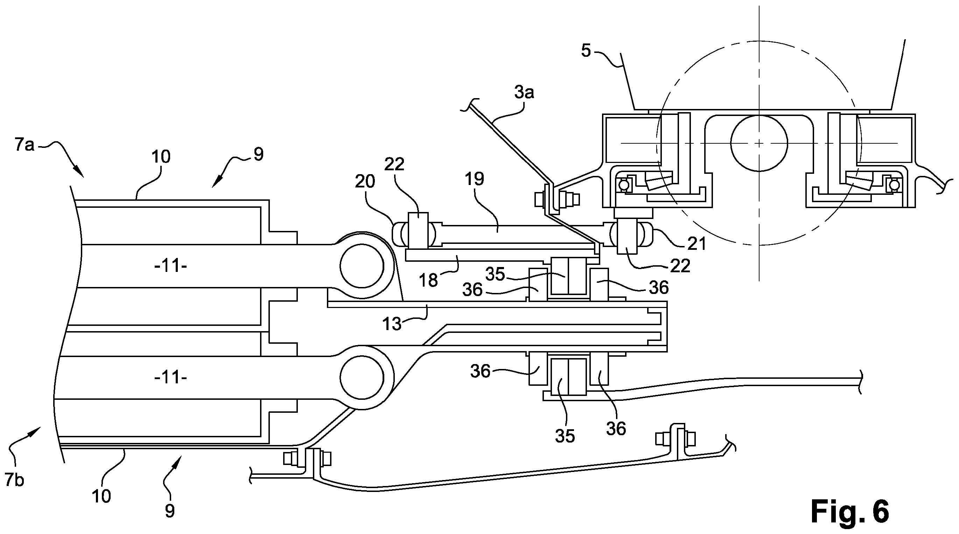

La figure 6 représente une variante supplémentaire d'un dispositif d'orientation intégré à turbopropulseur selon une réalisation non revendiquée. Comparativement aux figures 1 à 3, un seul dispositif d'orientation 7a est représenté intégralement, celui-ci étant utilisé pour orienter les pales 5 que comporte la nacelle rotative 3a. Le dispositif d'orientation 7a représenté sur cette figure diffère des dispositifs d'orientation 7a qui sont représentés aux figures 1 à 5 en ce que, pour chaque pale 5, les moyens 12 d'interface comportent :
- un aimant principal 35 solidaire du deuxième anneau 18. Cet aimant principal 35 est formé par une virole disposée sur la paroi interne du deuxième anneau 18,
- deux aimants secondaires 36 solidaires du premier anneau 13. Ces deux aimants secondaires 36 sont formés chacun par une deuxième virole secondaire disposée sur la paroi externe du premier anneau 13.

Les deux aimants secondaires 36 sont séparés l'un de l'autre par l'aimant principal 35 de sorte que lorsque :
- les aimants secondaires 36 sont soumis à un mouvement de translation via la tige 11, ce mouvement de translation étant transmis par répulsion magnétique entre lesdits aimant principal 35 et secondaires 36 aux moyens 8 de transformation de mouvement,
- la nacelle rotative 3a et les moyens 8 de transformation de mouvement sont soumis à un mouvement de rotation, l'organe 9 étant séparé en rotation des moyens 8 de transformation de mouvement.

Préférentiellement, le turbopropulseur 1 est équipé de deux dispositifs d'orientation 7a et 7b permettant notamment d'orienter les pales 5 de deux nacelles rotatives 3a et 3b indépendamment l'une de l'autre en positionnant les pales 5 selon un angle de calage déterminé.

De façon avantageuse, il est entendu que chaque dispositif d'orientation 7a, 7b peut comporter une pluralité d'organe 9. De façon non limitative, chaque dispositif d'orientation 7a, 7b comporte de préférence 3, 4, 5 ou 6 organe 9.

L'invention est décrite dans ce qui précède à titre d'exemple, il est entendu que l'homme du métier est à même de réaliser différentes variantes du turbopropulseur selon l'invention, sans pour autant sortir de l'étendue de l'invention, telle que définie par les revendications suivantes.

## Revendications

1. Turbopropulseur (1) muni d'au moins un dispositif d'orientation (7a) de pales comportant :
- une nacelle fixe (2),
- au moins une nacelle rotative (3a) comportant une pluralité de pales (5) orientables par rotation autour d'un axe principal et ayant chacune un pied de pale (4),
- une turbine (6), lesdites nacelles fixe (2) et rotative (3a) et ladite turbine (6) étant coaxiales selon un axe longitudinal, dit axe longitudinal x,
- ledit dispositif d'orientation (7a) de pales (5) comportant :
- pour chaque pale (5), des moyens (8) de transformation de mouvement aptes à transformer un mouvement de translation en mouvement de rotation, chacun desdits moyens (8) de transformation de mouvement étant solidaires de ladite nacelle rotative (3a) et étant aptes à faire pivoter une pale (5), ledit dispositif d'orientation (7a) étant positionné entre la surface interne (S2) de ladite nacelle fixe (2) et la surface externe (S6) de ladite turbine (6),
- au moins un organe (9) incluant un corps (10) solidaire de ladite nacelle fixe (2) et une tige (11) apte à coulisser selon un axe sensiblement parallèle au dit axe longitudinal x, ladite tige étant apte à coopérer avec un premier anneau (13) d'axe longitudinal x, ledit premier anneau (13) étant apte à être entraîné en translation par ladite tige (11), ledit premier anneau (13) étant guidé en translation par un anneau de guidage (14) d'axe longitudinal x solidaire de ladite nacelle fixe (2),
- des moyens (12) d'interface situés entre ledit au moins un organe (9) et lesdits moyens (8) de transformation de mouvement, lesdits moyens (12) d'interface comportant :
- un premier arbre (30) perpendiculaire, par rapport au dit axe longitudinal x, solidaire dudit premier anneau (13), ledit premier arbre (30) comportant un premier roulement (31) coaxial,
- un deuxième arbre (32) perpendiculaire, par rapport au dit axe longitudinal x, solidaire dudit premier anneau (13), ledit deuxième arbre (32) comportant un deuxième roulement (33) coaxial,
- lesdits moyens (12) d'interface étant aptes à :
- transmettre un mouvement de translation de ladite tige (11) aux dits moyens (8) de transformation de mouvement,
- séparer ledit organe (9) desdits moyens (8) de transformation de mouvement de sorte que lorsque ladite nacelle rotative (3a) est en rotation, ledit au moins un organe (9) ne soit pas entraîné en rotation par lesdits moyens (8) de transformation de mouvement et lesdits moyens (8) de transformation de mouvement comportent :
- un deuxième anneau (18) d'axe longitudinal x, ledit deuxième anneau (18) comportant une virole (34) interne séparant lesdits premier et deuxième roulements coaxiaux (31, 33) de sorte que :
- lorsque ladite tige (11) dudit au moins un organe (9) est soumise à un mouvement de translation, ladite translation soit transmise aux dits moyens (8) de transformation de mouvement via le premier ou deuxième roulement coaxial (31, 33),
- lorsque ladite nacelle rotative (3a) et lesdits moyens (8) de transformation de mouvement sont soumis à un mouvement de rotation, ledit au moins un organe (9) soit, via lesdits premier et deuxième roulements coaxiaux (31,33), séparé en rotation desdits moyens (8) de transformation de mouvement ;
- pour chaque pale (5), une biellette (19) sensiblement parallèle au dit axe longitudinal x, ladite biellette (19) étant reliée à un pied (4) de pale (5) déterminé, ladite biellette (19) comporte un doigt (22) situé à une première extrémité (20) et un doigt (22) situé à une deuxième extrémité (21), lesdits doigts (22) étant agencés perpendiculairement par rapport au dit axe longitudinal x:
- ledit doigt (22) situé à ladite première extrémité (20) étant apte à coopérer avec ledit deuxième anneau (18) de sorte que lorsque ledit deuxième anneau (18) est soumis à un mouvement de translation, ladite biellette (19) soit également soumise à un mouvement de translation, ledit doigt (22) situé à ladite deuxième extrémité (21) étant apte à coopérer avec un orifice que comporte ledit pied (4) de pale (5) déterminé, ledit orifice étant excentré par rapport à l'axe principal du pied de pale, de sorte que lorsque ladite biellette (19) est soumise à un mouvement de translation, ledit pied (4) de pale (5) déterminé soit soumis à un mouvement de rotation.

2. Turbopropulseur (1) selon l'une quelconque des revendications précédentes, **caractérisé en ce que** ledit dispositif d'orientation (7a) comporte un nombre d'organe (9) compris entre trois et six.

3. Turbopropulseur (1) selon l'une quelconque des revendications précédentes, **caractérisé en ce qu'**il comporte une deuxième nacelle rotative (3b) comportant une pluralité de pieds (4) de pale (5), ladite pluralité de pieds (4) de pale (5) de ladite deuxième nacelle rotative (3b) étant apte à être orientée par un deuxième dispositif d'orientation (7b).

## Patentansprüche

1. Propellerturbine (1), die mit wenigstens einer Ausrichtungsvorrichtung (7a) von Rotorblättern versehen ist, umfassend:
- eine Turbinengondel (2),
- wenigstens eine rotierende Turbinengondel (3a), umfassend eine Vielzahl von per Rotation um eine Hauptachse ausrichtbaren Rotorblättern (5) und wobei jede einen Rotorblattfuß (4) aufweist,
- eine Turbine (6), wobei die genannte feste (2) und die genannte rotierende (3a) Turbinengondel und die genannte Turbine (6) gemäß einer Längsachse, bezeichnet als Längsachse x, koaxial sind,
- wobei die genannte Ausrichtungsvorrichtung (7a) von Rotorblättern (5) umfasst:
- bei jedem Rotorblatt (5) Umwandlungsmittel (8) der Bewegung, die zum Umwandeln einer Translationsbewegung in eine Rotationsbewegung geeignet sind, wobei jedes der genannten Transformationsmittel (8) an der genannten rotierenden Turbinengondel (3a) fest befestigt ist und geeignet ist, ein Rotorblatt (5) zum Schwenken zu bringen, wobei die genannte Ausrichtungsvorrichtung (7a) zwischen der internen Oberfläche (S2) der genannten festen Turbinengondel (2) und der externen Oberfläche (S6) der genannten Turbine (6) positioniert ist,
- wenigstens ein Organ (9), das einen Körper (10), der an der festen Turbinengondel (2) fest befestigt ist, und einen Stift (11), der geeignet ist, gemäß einer Achse zu gleiten, die deutlich parallel zu der genannten Längsachse x ist, enthält, wobei der genannte Stift geeignet ist, mit einem ersten Ring (13) der Längsachse x zusammenzuwirken, wobei der genannte erste Ring (13) geeignet ist, in Translation durch den genannten Stift (11) angetrieben zu sein, wobei der genannte erste Ring (13) in Translation von einem Führungsring (14) der Längsachse x geführt zu sein, der fest an der genannten festen Gondel (2) befestigt ist,
- Schnittstellenmittel (12), die zwischen dem genannten wenigstens einen Organ (9) und den genannten Umwandlungsmitteln (8) der Bewegung angeordnet sind, wobei die genannten Schnittstellenmittel (12) umfassen:
- eine erste Welle (30), die im Verhältnis zu der genannten Längsachse x lotrecht und fest an dem ersten Ring (13) befestigt ist, wobei die genannte erste Welle (30) ein erstes koaxiales Lager (31) umfasst,
- eine zweite Welle (32), die im Verhältnis zu der genannten Längsachse x lotrecht und fest an dem genannten ersten Ring (13) befestigt ist, wobei die zweite Welle (32) ein zweites koaxiales Lager (33) umfasst,
- wobei die genannten Schnittstellenmittel (12) geeignet sind zum:
- Übertragen einer Translationsbewegung des genannten Stiftes (11) auf die genannten Umwandlungsmittel (8) der Bewegung,
- Trennen des genannten Organs (9) von den genannten Umwandlungsmitteln (8) der Bewegung derart, dass, wenn die genannte rotierende Turbinengondel (3a) in Rotation ist, das genannte wenigstens eine Organ (9) von den genannten Umwandlungsmitteln (8) der Bewegung nicht in Rotation angetrieben ist und die genannten Umwandlungsmittel (8) der Bewegung umfassen:
- einen zweiten Ring (18) der Längsachse x, wobei der genannte zweite Ring (18) eine interne Dichtungshülse (34) umfasst, die das genannte erste und das genannte zweite koaxiale Lager (31, 33 derart trennen, dass:
- wenn der genannte Stift (11) des genannten wenigstens einen Organs (9) einer Translationsbewegung unterworfen ist, die genannte Translation den genannten Umwandlungsmitteln (8) der Bewegung über das erste oder das zweite koaxiale Lager (31, 33) übertragen ist,
- wenn die genannte rotierende Turbinengondel (3a) und die genannten Umwandlungsmittel (8) der Bewegung einer Rotationsbewegung unterzogen sind, das gesamte wenigstens eine Organ (9) über das genannte erste und das genannte zweite koaxiale Lager (31, 33) in Rotation von den genannten Umwandlungsmitteln (8) der Bewegung getrennt ist;
- bei jedem Rotorblatt (5) einen Hebel (19), der zur Längsachse x deutlich parallel ist, wobei der genannte Hebel (19) mit einem Fuß (4) eines bestimmten Rotorblattes (5) verbunden ist, der genannte Hebel (10) einen Finger (22), der an einem ersten Ende (20) angeordnet ist, und einen Finger (22) der an einem zweiten Ende (21) angeordnet ist, umfasst, wobei die genannten Finger (22) im Verhältnis zu der genannten Längsachse x lotrecht angeordnet sind;
- wobei der genannte Finger (22), der an dem genannten ersten Ende (20) angeordnet ist, geeignet ist, mit dem genannten zweiten Ring (18) derart zusammenzuwirken, dass, wenn der genannte zweite Ring (18) einer Translationsbewegung unterworfen ist, der genannte Hebel (19) ebenfalls einer Translationsbewegung unterworfen ist, wobei der genannte Finger (22), der an dem genannten zweiten Ende (21) angeordnet ist, geeignet ist, mit einer Öffnung zusammenzuwirken, die der genannte Fuß (4) des bestimmten Rotorblattes (5) umfasst, wobei die genannte Öffnung im Verhältnis zur Hauptachse des Rotorblattfußes derart außermittig ist, dass, wenn der genannte Hebel (19) einer Translationsbewegung unterworfen ist, der genannte Fuß (4) des bestimmten Rotorblattes (5) einer Rotationsbewegung unterworfen ist.

2. Propellerturbine (1) gemäß irgendeinem der voranstehenden Ansprüche, **dadurch gekennzeichnet, dass** die genannte Ausrichtungsvorrichtung (7a) eine zwischen drei und sechs inbegriffene Anzahl von Organen (9) umfasst.

3. Propellerturbine (1) gemäß irgendeinem der voranstehenden Ansprüche, **dadurch gekennzeichnet, dass** sie eine zweite rotierende Turbinengondel (3b) umfasst, umfassend eine Vielzahl von Füßen (4) des Rotorblattes (5), wobei die genannte Vielzahl von Füßen (4) des Rotorblattes (5) der genannten zweiten rotierenden Turbinengondel (3b) geeignet ist, durch eine zweite Ausrichtungsvorrichtung (7) ausgerichtet zu sein.

## Claims

1. A turboprop (1) provided with at least one blade positioning device (7a), comprising:
- a stationary nacelle (2),
- at least one rotary nacelle (3a) comprising a plurality of blade (5) orientable by rotation about a primary axis and each having a root,
- a turbine (6), said stationary (2) and rotary (3a) nacelles and said turbine (6) being coaxial in a longitudinal axis, referred to as longitudinal axis x,
- said blade (5) positioning device (7a) comprising:
- for each blade (5) a movement transformation means (8) suitable for transforming a translation movement into a rotation movement, each of said movement transformation means (8) being secured to said rotary nacelle (3a) and being suitable for pivoting a blade (5), said positioning device (7a) is placed between the inner surface (S2) of said stationary nacelle (2) and the outer surface (S6) of said turbine (6),
- at least one member (9) including a body (10) secured to said stationary nacelle (2) and a rod (11) suitable for sliding along an axis substantially parallel to said longitudinal axis x, said rod (11) is suitable for cooperating with a first ring (13) of longitudinal axis x, said first ring (13) being designed to be moved in translation under the influence of said rod (11), said first ring (13) being guided in translation by a guiding ring (14) of longitudinal axis x secured in fixed manner to said stationary nacelle (2)
- interface means (12) located between said at least one member (9) and said movement transformation means (8), said interface means (12) comprising:
- a first shaft (30) perpendicular to said longitudinal axis x, connected in fixed manner to said first ring (13), said first shaft (30) comprising a first coaxial bearing (31),
- a second shaft (32) perpendicular to said longitudinal axis x, connected in fixed manner to said first ring (13), said second shaft (32) comprising a second coaxial bearing (33),
said interface means (12) being suitable for:
- transmitting a translation movement of said rod (11) to said movement transformation means (8),
- uncoupling said member (9) from said movement transformation means (8) in such manner that when said rotary nacelle (3a) is rotating the at least one member (9) is not caused to rotate as well by said movement transformation means (8),
and said movement transformation means (8) comprise:
- a second ring (18) of longitudinal axis x, said second ring (18) comprising an internal ferrule (34) that separates said first and second coaxial bearings (31, 33) such that:
- when said rod (11) of said at least one member (9) undergoes a translation movement, said translation is transmitted to said movement transformation means (8) via the first or second coaxial bearing (31, 33),
- when said rotary nacelle (3a) and said movement transformation means (8) undergo a rotary movement, said at least one member (9) is uncoupled from the rotary motion of said movement transformation means (8) via said first and second coaxial bearings (31, 33),
- for each blade (5), a linkage (19) extending essentially parallel to said longitudinal axis x, said linkage (19) being connected to a specified blade (5) root (4) and comprising a finger (22) located at a first end (20) and a finger (22) located at a second end (21) thereof, said fingers (22) being disposed perpendicularly relative to longitudinal axis x,
- said finger (22) located on the first end (20) being designed to cooperate with said second ring (18) to such effect that when said second ring (18) undergoes a translation movement, said linkage (19) also undergoes a translation movement, said finger (22) located on the second end (21) being designed to cooperate with an orifice of said predetermined blade (5) root (4), said orifice being offset relative to principal axis of said predetermined blade (5) root (4) to such effect that when said linkage (19) undergoes a translation movement, said predetermined blade (5) root (4) undergoes a rotation movement.

2. The turboprop (1) according to any of the preceding claims, **characterised in that** said positioning device (7a) comprises a number of members (9) from three to six.

3. The turboprop (1) according to any of the preceding claims, **characterised in that** it comprises a second rotary nacelle (3b) that includes a plurality of blade (5) roots (4), said plurality of blade (5) roots (4) of said second rotary nacelle (3b) being designed such that it is able to be positioned by a second positioning means (7b) .
